Europäisches Patentamt

European Patent Office

Office européen des brevets

(11) Veröffentlichungsnummer: **0 419 808 B1**

(12) **EUROPÄISCHE PATENTSCHRIFT**

(45) Veröffentlichungstag der Patentschrift: **06.07.94**

(51) Int. Cl.5: **F02D 9/06**, F02D 41/22

(21) Anmeldenummer: **90114654.8**

(22) Anmeldetag: **31.07.90**

(54) **Verfahren zur Betätigung einer in der Abgasleitung einer luftverdichtenden Einspritzbrennkraftmaschine angeordneten Drosselklappe.**

(30) Priorität: **28.09.89 DE 3932420**

(43) Veröffentlichungstag der Anmeldung:
**03.04.91 Patentblatt 91/14**

(45) Bekanntmachung des Hinweises auf die Patenterteilung:
**06.07.94 Patentblatt 94/27**

(84) Benannte Vertragsstaaten:
**AT CH FR IT LI SE**

(56) Entgegenhaltungen:
**FR-A- 2 605 049**
**GB-A- 2 216 596**
**US-A- 4 570 591**

**PATENT ABSTRACTS OF JAPAN, Band 7, Nr. 197 (M-239)[1342], 27. August 1983;& JP-A-58 96 133 (TOYOTA JIDOSHA KOGYO K.K.) 08-06-1983**

**PATENT ABSTRACTS OF JAPAN, Band 7, Nr. 257 (M-256)[1402], 16. November 1983;& JP-A-58 140 431 (TOYOTA JIDOSHA KOGYO K.K.) 20-08-1983**

(73) Patentinhaber: **MERCEDES-BENZ AG**
**Mercedesstrasse 137**
**D-70327 Stuttgart(DE)**

(72) Erfinder: **Hertweck, Gernot**
**Esslinger Strasse 70**
**D-7012 Fellbach(DE)**
Erfinder: **Bender, Franz**
**Egerlandstrasse 97**
**D-7317 Wendlingen(DE)**

**Beschreibung**

Die Erfindung bezieht sich auf ein Verfahren zur Betätigung eines in der Ansaugleitung einer luftverdichtenden Einspritzbrennkraftmaschine angeordneten Drosselelementes gemäß Oberbegriff des Patentanspruches 1.

Aus der DE-PS 31 28 783 wird ein derartiges Verfahren zur Steuerung der Abgasrückführung zur Reduzierung der Schadstoffemission, insbesondere der Partikelemission eingesetzt. Ferner ist durch die Abgasrückführung eine Reduzierung des Stickoxid $(NO_x)$-Ausstoßes zur erreichen. Die Betätigung der in der Saugleitung angeordneten Drosselklappe erfolgt dabei stufenweise in Abstimmung mit einem in einer Abgasrückführleitung angeordneten Abgasrückführventil.

Bei einem aus der JP-OS 58-140431 bekannten Verfahren ist vorgesehen, eine in der Ansaugleitung einer Dieselbrennkraftmaschine angeordnete Drosselklappe dann, wenn das Fahrzeug ab einer bestimmten Höhe gefahren wird, vollständig zu öffnen, selbst wenn die Brennkraftmaschine momentan im Leerlauf betrieben wird. Es sollen dadurch die Weißrauchempfindlichkeit reduziert sowie Zündprobleme ausgeschlossen werden.

Bei einer aus der US-PS 4 570 591 bekannten Dieselbrennkraftmaschine ist vorgesehen, den Einspritzventilöffnungsdruck und damit den Kraftstoffeinspritzdruck und den momentanen Ansaugluftmassenstrom so aufeinander abzustimmen, daß in jedem Betriebspunkt der Brennkraftmaschine eine Reduzierung der Schadstoffemission erreicht werden kann. Der Ansaugluftmassenstrom kann dabei über eine in der Ansaugleitung angeordnete und über eine elektronische Steuereinheit ansteuerbare Drosselklappe in Abhängigkeit mehrerer Betriebsparameter der Brennkraftmaschine beeinflußt werden.

Der Erfindung liegt die Aufgabe zugrunde, ein Verfahren der im Oberbegriff des Patentanspruches 1 angegebenen Art aufzuzeigen, mit welchem eine Reduzierung der Schadstoffemission, insbesondere der Partikel- und Stickoxidemission ohne den Einsatz einer aufwendigen Einrichtung zur Abgasrückführung erreichbar ist.

Die Aufgabe wird erfindungsgemäß durch die Merkmale des kennzeichnenden Teiles des Hauptanspruches gelöst.

Durch eine Reduzierung des Ansaugluftmassenstromes durch Drosselung des Ansaugluftstromes wird bis in den Teillastbereich aufgrund einer verringerten Auskühlung des Brennraumes generell eine verbesserte Verbrennung und damit eine reduzierte Schadstoffemission erzielt. Darüber hinaus wird durch die erfindungsgemäße sehr feinfühlige Abstimmung der Ansaugluftdrosselung auf den jeweiligen Betriebspunkt der Brennkraftmaschine zum einen eine gezielte Reduzierung der Reaktionspartner Stickstoff und Sauerstoff und zum anderen eine gezielte Erhöhung des Zündverzuges bewirkt. Dies führt zu einer relativ spätlastigen Wärmefreisetzung im Brennraum, welche zu einer nur verminderten Partikel- und Stickoxidbildung führt, wobei jedoch gleichzeitig nur eine unwesentliche Beeinflussung der Kohlenwasserstoffemission gegeben ist. Dieser Heizverlauf führt zudem zu einer verstärkten Oxidation der zu Beginn des Verbrennungsvorganges entstehenden Partikel und damit auch zu einer Reduzierung der Partikelemission.

Die Korrektur des Sollwertes für den Absolutdruck im Ansaugsystem gemäß Anspruch 4 gewährleistet bezogen auf einen bestimmten Last- und Drehzahlpunkt immer den gleichen oder einen nur teilweise verminderten Differenzdruck zwischen dem Ansaugsystem und der Atmosphäre. Die Drosselwirkung wird damit unabhängig von der Höhe, in welcher die Brennkraftmaschine gerade betrieben wird, wobei jedoch ein vollständiges Öffnen der Drosselklappe unterhalb eines vorgegebenen Grenzwertes für den Atmosphärendruck, also ab einer bestimmten Höhe, ein vorzeitiges "Blaurauchen" der Brennkraftmaschine verhindert.

Mit der Ausgestaltung des Verfahrens nach Anspruch 5 wird durch eine Reduzierung der Drosselung (Erhöhung des Sollwertes für den Absolutdruck) in Richtung niederer Außentemperaturen die Blaurauchempfindlichkeit vermindert und gleichzeitig in Richtung höherer Außentemperaturen ebenfalls durch eine Reduzierung der Drosselung eine thermische Überlastung der Brennkraftmaschine verhindert. Analog gilt für die Ausgestaltung nach Anspruch 6, daß in der Kaltlaufphase der Brennkraftmaschine die Blaurauchempfindlichkeit reduziert ist und ebenso die Brennkraftmaschine vor einer thermischen Überlastung geschützt ist.

In der Zeichnung ist das erfindungsgemäße Verfahren anhand eines Ausführungsbeispieles aufgezeigt. Im einzelnen zeigt

Figur 1      ein Ausführungsbeispiel einer Vorrichtung zur Durchführung des erfindungsgemäßen Verfahrens in einer Prinzipdarstellung,

Figur 2      die erfindungsgemäße Ansteuerung der Drosselklappe in einem Blockschaltbild,

Figur 3      ein Kennfeld für eine Brennkraftmaschine n = $f(x_{RS})$,

Figur 4a-c      3 Diagramme, gemäß derer der Sollwert für den Absolutdruck $p_{abs,soll}$ korrigiert wird.

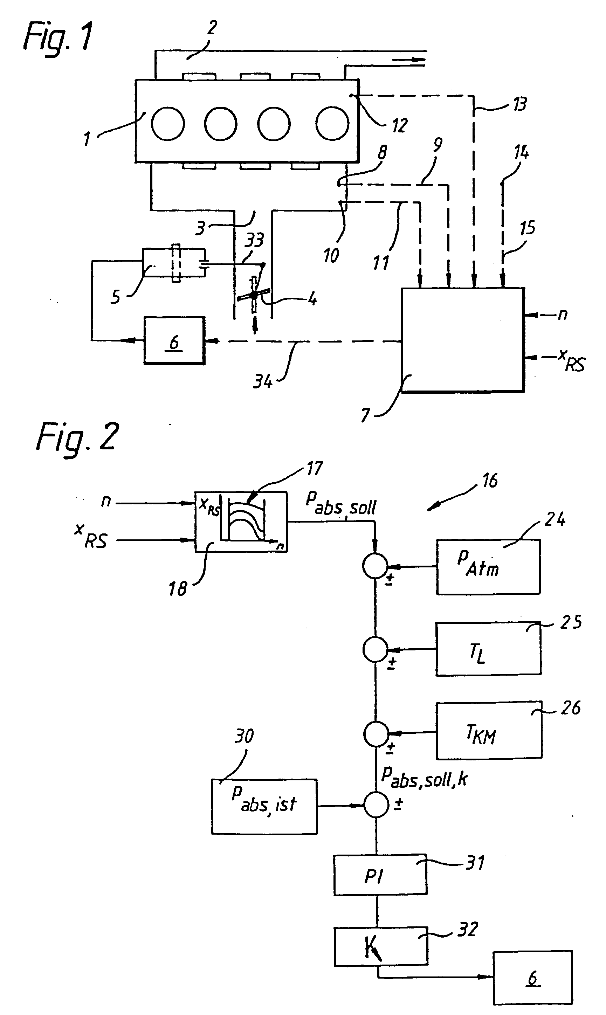

In Figur 1 zeigt 1 eine luftverdichtende Einspritzbrennkraftmaschine mit einem Abgas 2- und einem Ansaugsystem 3. In dem Ansaugsystem 3 ist ein als Klappe 4 ausgebildetes Drosselelement angeordnet, welches über das Gestänge 33 eines pneumatischen Stellgliedes 5 und einen dieses Stellglied 5 beaufschlagenden elektropneumatischen Druckumsetzer 6 betätigbar ist. Angesteuert wird der Druckumsetzer 6 von einer elektronischen Steuereinheit 7, welcher über den Sensor 8 und die Meßwertleitung 9 ein den Absolutdruck $p_{abs,ist}$ im Ansaugsystem 3 stromab der Drosselklappe 4 entsprechendes Signal, über den Sensor 10 und die Meßwertleitung 11 ein der Ansauglufttemperatur $T_L$ an dieser Stelle entsprechendes Signal, über den Sensor 12 und die Meßwertleitung 13 ein der Temperatur $T_{KM}$ des Kühlmittels der Brennkraftmaschine 1 entsprechendes Signal und über den Sensor 14 und die Meßwertleitung 15 ein dem Atmosphärendruck $p_{Atm}$ entsprechendes Signal zugeführt wird. Die Betätigung der Drosselklappe 4 über den elektropneumatischen Druckumsetzer 6 und das Stellglied 5 hat den Vorteil, daß bei einer Änderung des von der elektronischen Steuereinheit 7 über die Steuerleitung 34 ausgegebenen Steuersignals ein sehr schnelles Nachstellen der Drosselklappe 4 gewährleistet ist. Ferner ist die Drosselklappe 4 sehr feinfühlig steuerbar, so daß schon eine geringe Änderung des Steuersignals ein Ansprechen der Drosselklappe 4 verursacht.

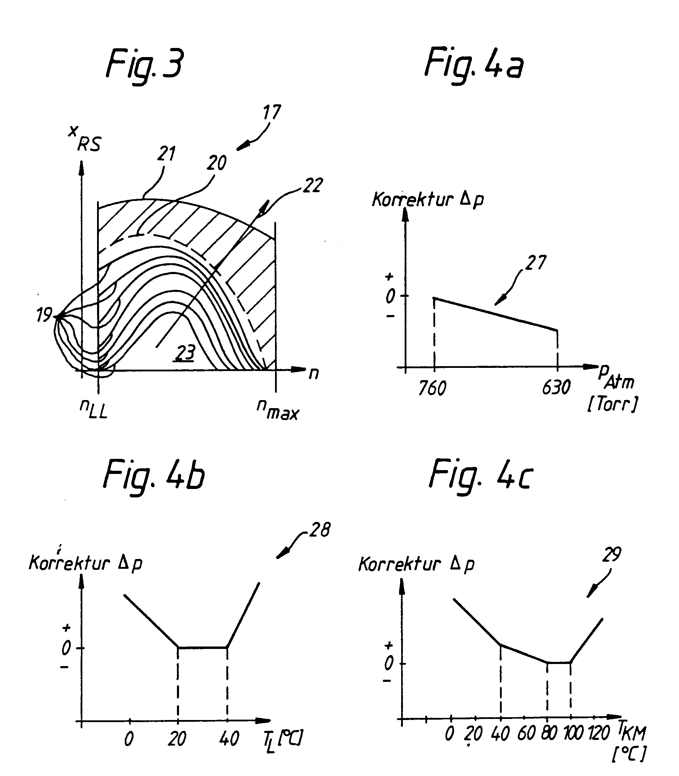

Die Ansteuerung der Drosselklappe 4 erfolgt gemäß dem in der Figur 2 dargestellten Blockdiagramm 16. Zunächst wird in Block 18 aus einem Motorenkennfeld 17 (s. auch Figur 3) entsprechend der gerade aktuellen Brennkraftmaschinenlast $x_{RS}$ - ($x_{RS}$ ist ein Maß für die Auslenkung der Regelstange an der Einspritzpumpe der Brennkraftmaschine 1 und damit ein Maß für die Last) und Drehzahl n ein Sollwert für den Absolutdruck $p_{abs,soll}$ ermittelt. In dem Kennfeld 17 in Figur 3 bezeichnen 19 die Kennlinien für den Drosselbereich, wobei entlang dieser Linien 19 ein konstanter Absolutdruck $p_{abs,soll}$ gegeben ist. Ab der gestrichelten Linie 20 bis hin zur Vollastkennlinie 21 (schraffierter Bereich) erfolgt keine Drosselung der Ansaugluft mehr. In Richtung des Pfeiles 22 nimmt der Absolutdruck $p_{abs,soll}$ zu. Der Bereich maximaler Drosselung liegt also in dem Bereich 23. Das Kennfeld 17 ist ausgelegt auf einen Umgebungs- bzw. Atmosphärendruck $p_{Atm}$ von 760 Torr (Meereshöhe).

Nach der Ermittlung des Sollwertes für den Absolutdruck $p_{abs,soll}$ erfolgt über die Blöcke 24 - 26 (Figur 2) eine additive Korrektur dieses Sollwertes $p_{abs,soll}$ und zwar über den Block 24 in Abhängigkeit des über den Sensor 14 erfaßten Atmosphärendruckes $p_{Atm}$, über den Block 25 in Abhängigkeit der über den Sensor 10 erfaßten Ansauglufttemperatur $T_L$ und über den Block 26 in Abhängigkeit der über den Sensor 12 erfaßten Temperatur $T_{KM}$ des Kühlmittels für die Brennkraftmaschine 1. Die Korrektur in Abhängigkeit des Atmosphärendruckes $p_{Atm}$ erfolgt dabei gemäß dem Schaubild 27 in Figur 4a derart, daß der Sollwert für den Absolutdruck $p_{abs,soll}$ mit fallendem Atmosphärendruck $p_{Atm}$ ausgehend von 760 Torr linear reduziert wird, indem der Betrag des Korrekturwertes $\Delta p$ zunimmt. Wird z.B. beim Befahren einer Steigung in dem gerade aktuellen Betriebszustand der Brennkraftmaschine (Last, Drehzahl) aus dem Kennfeld 17 ein Sollwert für den Absolutdruck $p_{abs,soll}$ von 700 Torr ausgelesen, so gilt dieser Sollwert zunächst einmal nur für den Atmospharendruck auf Meereshöhe. Da sich nun der Atmosphärendruck $p_{Atm}$ mit steigender Höhe kontinuierlich verringert, ist ab derjenigen Höhe, ab der die 700 Torr Absolutdruck im Ansaugsystem 3 durch den Zugewinn an Höhe automatisch erreicht sind, die Drosselklappe 4 vollständig geöffnet, obwohl im Hinblick auf die Schadstoffemission eine gewisse Drosselung der Ansaugluft noch möglich wäre. Dem wird nun erfindungsgemäß dadurch Rechnung getragen, daß von dem ausgelesenen Sollwert von 700 Torr entsprechend dem aktuellen Atmosphärendruck $p_{Atm}$ noch ein vorgegebener Korrekturwert $\Delta p$ abgezogen wird (Addition eines negativen $\Delta p$), so daß der Absolutdruck im Ansaugsystem 3 durch ein entsprechendes Anstellen der Drosselklappe 4 auf einen niedereren Wert eingeregelt wird. Unterhalb eines vorgegebenen Grenzwertes von 630 Torr schließlich wird die Drosselklappe 4 in ihre den gesamten Querschnitt des Ansaugsystems 3 freigebende Stellung (gestrichelte Darstellung der Drosselklappe 4) überführt.

Gemäß Schaubild 28 der Figur 4b wird die Korrektur $\Delta p$ des Sollwertes für den Absolutdruck $p_{abs,soll}$ bis hin zu einem ersten Ansauglufttemperaturwert von 20°C mit steigender Ansauglufttemperatur $T_L$ kontinuierlich verringert, in dem mittleren Ansauglufttemperaturbereich von 20°C bis hin zu einem zweiten Ansauglufttemperaturwert von 40°C konstant gehalten und ab dem zweiten Ansauglufttemperaturwert von 40°C mit steigender Ansauglufttemperatur $T_L$ wieder kontinuierlich erhöht.

Das Schaubild 29 in Figur 4c schließlich zeigt die Korrektur $\Delta p$ des aus dem Kennfeld 17 ausgelesenen Sollwertes für den Absolutdruck $p_{abs,soll}$ in Abhängigkeit der Kühlmitteltemperatur $T_{KM}$. Die Korrektur $\Delta p$ des Sollwertes wird dabei bis hin zu einem ersten Kühlmitteltemperaturwert von 80° mit steigender Kühlmitteltemperatur $T_{KM}$ kontinuierlich verringert, von diesem ersten Kühlmitteltemperaturwert bis hin zu einem zweiten Kühlmitteltemperaturwert von 100°C konstant gehalten und ab diesem zweiten Wert mit steigender Kühlmitteltemperatur $T_{KM}$ wieder kontinuierlich vergrößert.

Auf diesen korrigierten Sollwert $p_{abs,soll,k}$ wird nun der Absolutdruck $p_{abs,ist}$ im Ansaugsystem 3, welcher über den Sensor 8 erfaßt wird (Block 30), mit Hilfe eines PI-Reglers nachgeregelt (Block 31). Dies geschieht durch eine entsprechende Ansteuerung der Drosselklappe 4 bzw. des diese über das pneumatische Stellglied 5 betätigenden elektropneumatischen Druckumsetzers 6. Hierbei wird mit Hilfe einer Endstufe das Regelerausgangssignal zu einem Stellsignal für den elektropneumatischen Druckumsetzer 6 verstärkt (Block 32).

Eine Erhöhung der Drosselung des Ansaugluftstromes, also eine Verringerung des Strömungsquerschnittes im Ansaugsystem 3 bewirkt eine Verringerung des Absolutdruckes $p_{abs,ist}$ im Ansaugsystem 3 stromab der Drosselklappe 4. Damit ist für die Steuerung bzw. für die Regelung der Drosselklappenstellung generell zu sagen, daß - bezogen auf einen festen Betriebspunkt der Brennkraftmaschine 1 - eine korrektive Erhöhung des Sollwertes für den Absolutdruck $p_{abs,soll}$ einer Reduzierung der Ansaugluftdrosselung, also einer Vergrößerung des Strömungsquerschnittes im Ansaugsystem 3 gleichkommt und umgekehrt.

## Patentansprüche

1. Verfahren zur Betätigung eines im Ansaugsystem einer luftverdichtenden Einspritzbrennkraftmaschine angeordneten Drosselelementes (4), welches in niederen Last- und Drehzahlbereichen in Schließstellung und in mittleren und hohen Last- und Drehzahlbereichen in einer Öffnungsstellung gehalten ist, wobei jedem Betriebspunkt der Brennkraftmaschine eine bestimmte aus einem Kennfeld ermittelbare Öffnungsstellung des Drosselelementes (4) zugeordnet ist,
**dadurch gekennzeichnet,**
daß das Drosselelement (4) in jedem Betriebspunkt der Brennkraftmaschine (1) auf diejenige Öffnungsstellung eingeregelt wird, welche einem aus einem last- und drehzahlabhängigen Kennfeld (17) ermittelten Sollwert für den Absolutdruck ($p_{abs,soll}$) im Ansaugsystem (3) stromab des Drosselelementes (4) entspricht, wobei der Sollwert für den Absolutdruck ($p_{abs,soll}$) in Abhängigkeit des Atmosphärendruckes ($p_{Atm}$) derart korrigiert wird, daß eine Korrektur ($\Delta p$) des Sollwertes für den Absolutdruck ($p_{abs,soll}$) mit fallendem Atmosphärendruck ($p_{Atm}$) linear erhöht wird, so daß der Sollwert für den Absolutdruck abnimmt, und daß unterhalb eines vorgegebenen Grenzwertes für den Atmosphärendruck ($p_{Atm}$) das Drosselelement (4) in seine den gesamten Querschnitt des Ansaugsystems freigebende Stellung überführt wird.

2. Verfahren nach Anspruch 1,
**dadurch gekennzeichnet,**
daß die Korrektur ($\Delta p$) zum Sollwert für den Absolutdruck ($p_{abs,soll}$) addiert wird.

3. Verfahren nach einem der Ansprüche 1 bis 2,
**dadurch gekennzeichnet,**
daß Korrektur des Sollwertes für den Absolutdruck eine weitere ($p_{abs,soll}$) in Abhängigkeit der Ansauglufttemperatur ($T_L$) und/oder der Kühlmitteltemperatur ($T_{KM}$) erfolgt.

4. Verfahren nach Anspruch 3,
**dadurch gekennzeichnet,**
daß die weitere Korrektur ($\Delta p$) des Sollwertes für den Absolutdruck ($p_{abs,soll}$) im niederen Ansauglufttemperaturbereich bis hin zu einem ersten Ansauglufttemperaturwert mit steigender Ansauglufttemperatur ($T_L$) reduziert wird, ab diesem ersten Ansauglufttemperaturwert bis hin zu einem zweiten Ansauglufttemperaturwert konstant gehalten wird und ab diesem zweiten Ansauglufttemperaturwert mit steigender Ansauglufttemperatur ($T_L$) wieder erhöht wird, wobei der zweite Ansauglufttemperaturwert größer ist als der erste.

5. Verfahren nach einem der Ansprüche 3 bis 4,
**dadurch gekennzeichnet,**
daß die weitere Korrektur ($\Delta p$) des Sollwertes für den Absolutdruck ($p_{abs,soll}$) bis hin zu einer ersten Kühlmitteltemperatur mit steigender Kühlmitteltemperatur ($T_{KM}$) verringert wird, ausgehend von diesem ersten Kühlmitteltemperaturwert bis hin zu einem zweiten Kühlmitteltemperaturwert konstant gehalten wird und ab diesem zweiten Kühlmitteltemperaturwert mit steigender Kühlmitteltemperatur ($T_{KM}$) wieder erhöht wird, wobei der zweite Kühlmitteltemperaturwert größer ist als der erste.

## Claims

1. A process for the actuation of a throttling member (4) mounted in the suction system of an air-compressing injection internal combustion engine which in low load and speed ranges is held in closed position, and in medium and high load and speed ranges is held in an open position, there being associated with each operational point of the internal combustion engine a specific opening position of the throttling member (4) ascertainable from a range of performance characteristics, characterized in that the throttling member (4) is set in each operational point of the internal combustion engine (1) to that opening position which corresponds to a desired value for the absolute pressure ($P_{abs,soll}$) in the suction system (3) downstream of the throttllng member (4) ascertained from a range of performance characteristics (17) dependent on load and speed, the desired value for the absolute pressure ($P_{abs,soll}$) being corrected depending on atmospheric pressure ($P_{Atm}$) in such a manner that a correction ($\Delta p$) of the desired value for the absolute pressure ($P_{abs,soll}$) with dropping atmospheric pressure ($P_{Atm}$) is linearly increased so that the desired value for the absolute pressure decreases, and that below a preset limit value for atmospheric pressure ($P_{Atm}$) the throttling member is moved into its position freeing the entire cross-section of the suction system.

2. A process according to claim 1, characterized in that the correction ($\Delta p$) is added to the desired value for the absolute pressure ($P_{abs,soll}$).

3. A process according to either claim 1 or claim 2, characterized in that a further correction of the desired value for the absolute pressure ($P_{abs,soll}$) takes place depending on the suction air temperature ($T_L$) and/or the coolant temperature ($T_{KM}$).

4. A process according to claim 3, characterized in that the further correction ($\Delta p$) of the desired value for the absolute pressure ($_{abs,soll}$), in the low suction air temperature value is reduced as the suction air temperature ($T_L$) increases, is held constant from this first suction air temperature value until a second suction air temperature value, and from this second suction air temperature value is again increased as the suction air temperature ($T_L$) increases, the second suction air temperature value being greater than the first.

5. A process according to either claim 3 or 4, characterized in that the further correction ($\Delta p$) of the desired value for the absolute pressure ($P_{abs,soll}$) is restricted, as the coolant temperature ($T_{KM}$) to a first coolant temperature, is held constant starting from this first coolant temperature value up to a second coolant temperature value, and from this second coolant temperature value is again increased as the coolant temperature ($T_{KM}$) rises, the second coolant temperature value being higher than the first.

**Revendications**

1. Procédé d'actionnement d'un élément d'étranglement (4), disposé dans le système d'admission d'un moteur à combustion interne, à injection et compression d'air, qui est maintenu dans une position de fermeture dans les gammes basses de charges et de vitesses de rotation et dans une position d'ouverture dans les gammes moyennes et élevées de charges et de vitesses de rotation, chaque point de fonctionnement du moteur à combustion interne étant associé à une position déterminée d'ouverture de l'élément d'étranglement (4), pouvant être définie à partir d'un champ caractéristique, caractérisé en ce que l'élément d'étranglement (4) est réglé, en chaque point de fonctionnement du moteur à combustion interne (1), à la position d'ouverture qui correspond à une valeur de consigne de la pression absolue($p_{abs,consigne}$) dans le système d'admission (3) en aval de l'élément d'étranglement, cette valeur de consigne étant déterminée à partir d'un champ caractéristique (17) fonction de la charge et de la vitesse de rotation, en ce que la valeur de consigne de la pression absolue ($p_{abs,consigne}$) est corrigée en fonction de la pression atmosphérique ($p_{Atm}$) de telle sorte qu'une correction ($\Delta p$) de la valeur de consigne de la pression absolue ($p_{abs,consigne}$) soit augmentée linéairement quand la pression atmosphérique ($p_{Atm}$) diminue, de telle sorte que la valeur de consigne de la pression absolue décroisse, et que, en dessous d'une valeur limite prédéterminée de la pression atmosphérique ($p_{Atm}$), l'élément d'étranglement (4) soit transféré dans sa position dégageant toute la section du système d'admission.

2. Procédé selon la revendication 1, caractérisé en ce que la correction ($\Delta p$) est ajoutée à la valeur de consigne de la pression absolue ($p_{abs,consigne}$).

3. Procédé selon une des revendications 1 et 2, caractérisé en ce qu'une autre correction de la valeur de consigne de la pression absolue ($p_{abs,consigne}$) est effectuée en fonction de la température d'air d'admission ($T_L$) et/ou de la température de fluide réfrigérant ($T_{KM}$).

4. Procédé selon la revendication 3, caractérisé en ce que l'autre correction ($\Delta p$) de la valeur de consigne de la pression absolue ($p_{abs,consigne}$) est réduite dans une gamme inférieure de températures d'air d'admission jusqu'à une première valeur de température d'air d'admission quand la température d'air d'admission ($T_L$) augmente, elle est maintenue constante à partir de cette première valeur de température d'air d'admission jusqu'à une seconde valeur de température d'air d'admission et elle est augmentée à partir de cette seconde valeur de température d'air d'admission quand la température d'air d'admission ($T_L$)

augmente, la seconde valeur de température d'air d'admission étant plus grande que la première.

5. Procédé selon une des revendications 3 et 4, caractérisé en ce que l'autre correction ($\Delta p$) de la valeur de consigne de la pression absolue ($p_{abs,consigne}$) est réduite jusqu'à une première température de fluide réfrigérant quand la température de fluide réfrigérant ($T_{KM}$) augmente, elle est maintenue constante à partir de cette première valeur de température de fluide réfrigérant jusqu'à une seconde valeur de température de fluide réfrigérant et, à partir de cette seconde valeur de température de fluide réfrigérant, elle est à nouveau augmentée quand la température de fluide réfrigérant ($T_{KM}$) croît, la seconde valeur de température de fluide réfrigérant étant plus grande que la première.

*Fig. 1*

*Fig. 2*

# Fig. 3

# Fig. 4a

Korrektur $\Delta p$

# Fig. 4b

Korrektur $\Delta p$

# Fig. 4c

Korrektur $\Delta p$